# EUROPÄISCHE PATENTSCHRIFT

(11) **EP 3 723 952 B1**
(45) Veröffentlichungstag und Bekanntmachung des Hinweises auf die Patenterteilung: **09.03.2022**
(21) Anmeldenummer: 18825913.9
(22) Anmeldetag: 11.12.2018
(51) Int. Cl.: B26F 1/44, B26D 3/08, B26F 1/38, B26D 7/26, B26D 5/12, B26D 5/08, B32B 38/04, B32B 38/10

(54) **TRENNVORRICHTUNG UND TRENNVERFAHREN FÜR KLEBSTOFFHALTIGES VERBUNDMATERIAL**
SEPARATING APPARATUS AND SEPARATING METHOD FOR ADHESIVE-CONTAINING COMPOSITE MATERIAL
DISPOSITIF DE SÉPARATION ET PROCÉDÉ DE SÉPARATION POUR MATÉRIAU D'ASSEMBLAGE CONTENANT UN ADHÉSIF

(30) Priorität: 13.12.2017 DE 102017011506
(43) Veröffentlichungstag der Anmeldung: 21.10.2020
(73) Patentinhaber: LTS Lohmann Therapie-Systeme AG, 56626 Andernach (DE)
(72) Erfinder: GRÜNES, Bernd, 53177 Bonn Rheinland-Pfalz (DE)
(74) Vertreter: dompatent von Kreisler Selting Werner - Partnerschaft von Patent- und Rechtsanwälten mbB
(86) Internationale Anmeldenummer: PCT/EP2018/084281
(87) Internationale Veröffentlichungsnummer: WO 2019/115495

(56) Entgegenhaltungen:
- EP-A2- 1 882 564
- DE-A1- 19 831 418
- DE-A1-102005 002 014

## Beschreibung

Die Erfindung betrifft eine Vorrichtung mit einem Trennwerkzeug und mit einer Gegendruckplatte zum Erzeugen von Konturzügen in klebstoffhaltigen Verbundmaterialien, wobei das Trennwerkzeug in translatorischen Werkzeughubrichtungen zwischen einer Ruhelage und einer Auftrennlage normal zur Gegendruckplatte bewegbar ist, wobei in der Auftrennlage das Trennwerkzeug in Richtung der Ruhelage von der Gegendruckplatte beabstandet ist und wobei das Trennwerkzeug eine Werkzeugschneide mit einer normal zu den Werkzeughubrichtungen aufgespannten Schneidkantenebene aufweist, sowie ein Verfahren zum Erzeugen von Konturzügen in klebstoffhaltigen Verbundmaterialien mittels einer derartigen Vorrichtung.

Aus der DE 198 31 418 A1 sind eine derartige Vorrichtung und ein derartiges Verfahren bekannt. Sie sind für dünne Haftkleberschichten einsetzbar.

Der vorliegenden Erfindung liegt das Problem zugrunde, ein sicheres Trennen eines Stanzgitters von auf einer Trägerfolie verbleibenden Laminatabschnitten zu ermöglichen.

Diese Problemstellung wird mit den Merkmalen des Hauptanspruchs gelöst. Dazu umfasst die Vorrichtung mindestens einen Aktuator. Das Trennwerkzeug und die Gegendruckplatte sind relativ zueinander mittels jedes Aktuators in mindestens eine Erregungsrichtung mit einer Rampenfunktion und/oder mit einer Sprungfunktion ansteuerbar. Außerdem liegt jede dieser Erregungsrichtungen in einer Parallelebene zur Schneidkantenebene des Trennwerkzeugs.

Das Trennwerkzeug wird in translatorischen Werkzeughubrichtungen zwischen einer Ruhelage und einer zur Gegendruckplatte beabstandete Auftrennlage normal zur Gegendruckplatte und zurück bewegt. Das Trennwerkzeug durchtrennt das eine klebstoffhaltige Substratschicht enthaltende Verbundmaterial zumindest bereichsweise. In der Auftrennlage und/oder während des Rückhubs steuert der mindestens eine Aktuator das Trennwerkzeug und die Gegendruckplatte relativ zueinander mittels einer Rampenfunktion oder einer Sprungfunktion parallel zur Schneidkantenebene ansteuert.

Das klebstoffhaltige Verbundmaterial ist beispielsweise Teil einer mittels eines Unstetigförderers geförderten Laminatbahn. Es besteht z.B. aus einer Trägerfolie, einer darauf haftenden klebstoffhaltigen und gegebenenfalls wirkstoffhaltigen Schicht und einer auf der klebstoffhaltigen Schicht haftenden Deckfolie. Um Konturzüge im klebstoffhaltigen Verbundmaterial herzustellen, wird das beispielsweise als Ringmesser ausgebildete Trennwerkzeug in einer Werkzeughubrichtung von der Ruhelage in Richtung der Auftrennlage verfahren. Hierbei wird die Deckschicht vollständig und die klebstoffhaltige Schicht zumindest bereichsweise durchtrennt. Die Trägerfolie wird nicht durchtrennt. Um verbliebene Verbindungen der klebstoffhaltigen Schicht zwischen dem Innenbereich und dem Außenbereich aufzutrennen, werden das Trennwerkzeug und die Gegendruckplatte relativ zueinander mittels eines Aktuators erregt. Hierbei können die beiden Bauteile mittels einer Rampenfunktion zueinander versetzt werden und/oder mittels einer Sprungfunktion, z.B. durch einen Stößelimpuls, zu Schwingungen angeregt werden. Dies erfolgt zumindest in der Auftrennlage, wenn also das Trennwerkzeug seinen geringsten Abstand zur Gegendruckplatte erreicht hat. Die Bewegung des Trennwerkzeugs relativ zur Gegendruckplatte kann während des Rückhubs fortgesetzt werden. Die Erregung des Trennwerkzeugs und der Gegendruckplatte relativ zueinander erfolgt in einer Parallelebene zur Schneidkantenebene des Trennwerkzeugs. Diese Schneidkantenebene ist normal zur Mittelachse des Trennwerkzeugs und zu den Werkzeughubrichtungen. In der Folge kann das die auf der Trägerfolie verbleibenden Laminatabschnitte umgebende Stanzgitter problemlos abgezogen werden.

Weitere Einzelheiten der Erfindung ergeben sich aus den Unteransprüchen und den nachfolgenden Beschreibungen schematisch dargestellter Ausführungsbeispiele.
- Figur 1:: Vorrichtung zur Herstellung von Laminatabschnitten;
- Figur 2:: Draufsicht auf den Werkzeugträger;
- Figur 3:: Schnitt A-A aus Figur 2;
- Figur 4:: Trennwerkzeug;
- Figur 5:: Ansicht der Werkzeugeinheit normal zur Mittenlängsebene;
- Figur 6:: Trennwerkzeug mit Wellenschliff;
- Figur 7:: Schnitt eines Trennwerkzeugs mit innenliegender Schneidkante;
- Figur 8:: Trennwerkzeug aus Figur 7 beim Kontakt mit der Laminatbahn;
- Figur 9:: Trennwerkzeug in der Auftrennlage;
- Figur 10:: Trennwerkzeug beim Querversatz;
- Figur 11:: Trennwerkzeug in der Ruhelage;
- Figur 12:: Teilschnitt einer Vorrichtung mit federnd gelagertem Trennwerkzeug;
- Figur 13:: Trennwerkzeug aus Figur 12;
- Figur 14:: Vorrichtung mit an der Trägerplatte angeordneter Antriebseinheit
- Figur 15:: Vorrichtung mit zwei Antriebseinheiten;
- Figur 16:: Querschnitt der Figur 15.

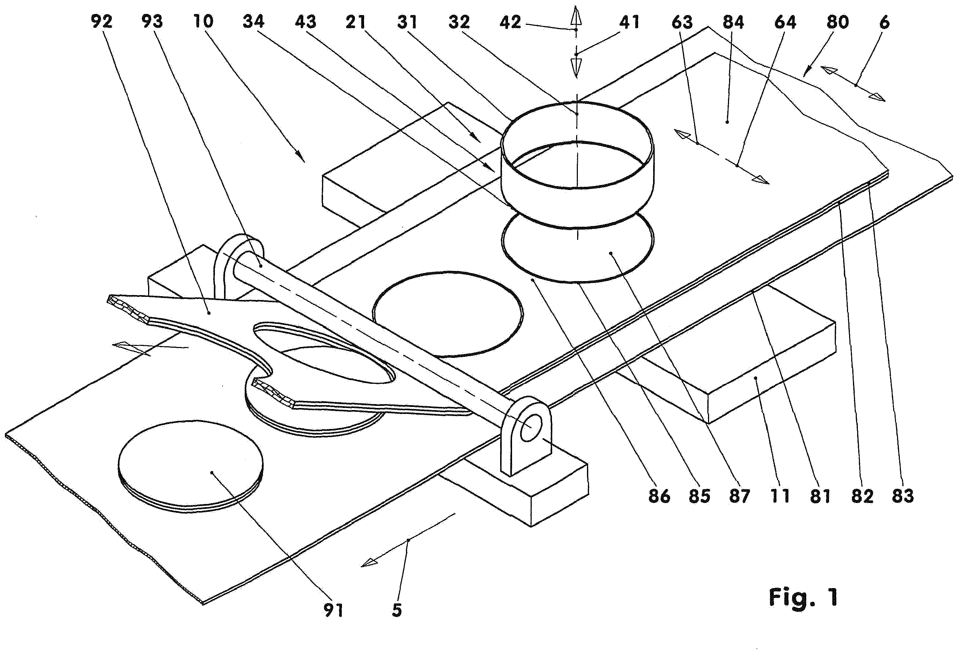

Die Figur 1 zeigt eine Vorrichtung zur Herstellung von Laminatabschnitten (91) aus einer Laminatbahn (80). Die Laminatbahn (80) wird intermittierend mittels eines Unstetigförderers in einer Förderrichtung (5) gefördert. Die Taktfrequenz der Fördervorrichtung beträgt zwischen 5000 und 6000 Förderhübe pro Stunde. Bei jedem Takt wird die von einer Rolle abgewickelte, z.B. mehrere hundert Meter lange Laminatbahn (80) gegriffen und um einen Vorschubbetrag in der Förderrichtung (5) gezogen. Dieser Vorschubbetrag beträgt beispielsweis fünf Zentimeter pro Takt.

Die Laminatbahn (80) ist ein klebstoffhaltiges Verbundmaterial (80). Im Ausführungsbeispiel besteht das Verbundmaterial (80) aus drei Schichten (81 - 83). Die unterste Schicht ist eine Transportfolie (81) mit einer Dicke zwischen 75 Mikrometern und 100 Mikrometern. In der Breitenrichtung (6), die quer zur Förderrichtung (5) orientiert ist, beträgt die Breite beispielsweise 75 Millimeter. Im Ausführungsbeispiel besteht die Transportfolie aus Polyethylenterephthalat (PET). Sie ist beispielsweise dehäsiv ausgerüstet.

Auf der Transportfolie (81) haftet eine klebstoffhaltige Substratschicht (82). Diese Substratschicht (82) kann zusätzlich Wirkstoffe enthalten. In der Breitenrichtung (6) beträgt die Breite der Substratschicht (82) beispielsweise zwei Drittel der Breite der Transportfolie (81). Die Transportfolie (81) steht beidseitig über die symmetrisch zu ihrer vertikalen Mittenlängsebene angeordnete Substratschicht (82) über. Die Substratschicht (82) hat beispielsweise eine Dicke zwischen 100 Mikrometern und 500 Mikrometern. Die Reißdehnung der klebstoffhaltigen Substratschicht (82) ist beispielsweise größer als 50 %, sie liegt z.B. zwischen 50 % und 100 %. Der Elastizitätsmodul ist beispielsweise kleiner als 30 Newton pro Quadratmillimeter.

Die Substratschicht (82) ist mittels einer Abdeckfolie (83) abgedeckt. Die Abdeckfolie (83) kann aus dem gleichen Werkstoff wie die Transportfolie (81) hergestellt sein. Sie hat eine Dicke von z.B. 23 Mikrometer. Ihre Reißfestigkeit beträgt beispielsweise 40 Newton pro Zentimeter. Die Reißfestigkeit, das ist die längenbezogene Kraft, bei der ein Anriss auftritt, liegt zwischen 100 Newton pro Zentimeter und 140 Newton pro Zentimeter. Die Reißdehnung liegt zwischen 80 % und 120 %. Diese Werte entsprechen beispielsweise den Werten der Transportfolie (81). Die Abdeckfolie (83) kann zumindest auf der der Substratschicht (82) zugewandten Seite dehäsiv ausgerüstet sein.

Oberhalb der Laminatbahn (80) ist in der Darstellung der Figur 1 als Bauteil einer Trennwerkzeugeinheit (21) ein Trennwerkzeug (31) dargestellt. Dieses Trennwerkzeug (31) ist ein Ringmesser (31). Es hat eine geschlossene Werkzeugschneide (34), die in Richtung der Laminatbahn (80) orientiert ist. Die gesamte, z.B. kreisringförmig ausgebildete Werkzeugschneide (34) liegt in einer Ebene parallel zur Oberfläche (84) der Laminatbahn (80) und parallel zu einer unter der Laminatbahn (80) angeordneten Gegendruckplatte (11). Die Werkzeugschneide (34) kann auch ellipsenförmig, oval, drei- oder mehreckig, etc. ausgebildet sein.

In der Figur 1 ist das Trennwerkzeug (31) in einer Ruhelage (43) dargestellt. In dieser Ruhelage (43) ist das Trennwerkzeug (31) von der Laminatbahn (80) beabstandet.

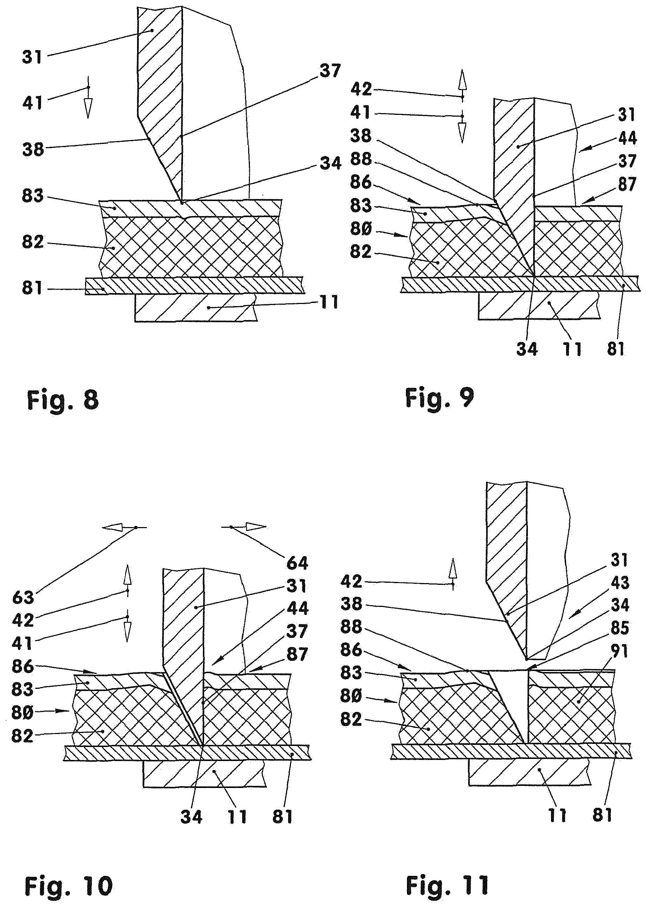

Aus der Ruhelage (43) ist das Trennwerkzeug mittels einer Werkzeughubvorrichtung in Werkzeughubrichtungen (41, 42) normal zur Gegendruckplatte (11) in eine Auftrennlage (44) und zurück verfahrbar. In der Auftrennlage (44) des Trennwerkzeugs (31), vgl. Figur 9, ist das Trennwerkzeug (31) zumindest um die Dicke der Transportfolie (81) beabstandet zur Gegendruckplatte (11). In der Auftrennlage (44) hat der translatorische, normal zur Gegendruckplatte (11) orientierte Werkzeughub des Trennwerkzeugs (31) seinen Umkehrpunkt erreicht. Dieser Werkzeughub des Trennwerkzeugs (31) kann während des Stillstands oder während des Förderns der Fördervorrichtung erfolgen. Im letztgenannten Fall ist die Trennwerkzeugeinheit (21) z.B. zusammen mit der Fördervorrichtung verfahrbar.

Beim Werkzeughub der Trennvorrichtung (31) normal zur Gegendruckplatte (11) werden in der Laminatbahn (80) z.B. geschlossene Konturzüge (85) erzeugt. Der Konturzug (85) kann auch eine gerade Linie oder eine offene gebogene Linie sein. Die Gestalt des jeweiligen Konturzugs (85) entspricht der Gestalt der Werkzeugschneide (34) des Trennwerkzeugs (31). Bei diesem Arbeitshub werden die Abdeckfolie (83) und die Substratschicht (82) gedehnt und zumindest weitgehend durchtrennt. Der in diesem Ausführungsbeispiel vom Konturzug (85) umgebene Teil der Laminatbahn (80) wird im Folgenden als Innenbereich (87) bezeichnet.

Das Trennwerkzeug (31) ist relativ zur Laminatbahn (80) in zwei einander entgegengesetzte Erregungsrichtungen (63, 64) parallel zur Gegendruckplatte (11) bewegbar. Diese mit den Erregungsrichtungen (63, 64) identischen Versatzrichtungen (63, 64) liegen in einer Normalenebene zur Mittelachse (32) des Trennwerkzeugs (31). Die Mittelachse (32) ist die geometrische Mittelachse (32) des Trennwerkzeugs (31). Dieser Versatz des Trennwerkzeugs (31) erfolgt zumindest in der Auftrennlage (44). Hier liegen die Versatzrichtungen (63, 64) zusätzlich in einer Normalenebene zu den Werkzeughubrichtungen (41, 42). Die Versatzbewegung kann während des Rückhubs (42) fortgesetzt werden. In der Darstellung der Figur 1 sind die Versatzrichtungen (63, 64) linear ausgerichtet. Sie sind normal zur Förderrichtung (5) orientiert. Es ist aber auch denkbar, die Versatzrichtungen (63, 64) parallel zur Förderrichtung (5) zu orientieren. Auch können die Versatzrichtungen (63, 64) auf einer Kreisbahn um die geometrische Mittelachse (32) des Trennwerkzeugs (31) liegen.

Im nachfolgenden Verfahrensschritt wird das die Innenbereiche (86) umgebende Stanzgitter (92) abgezogen. Das Stanzgitter (92) umfasst sowohl Bereiche der Abdeckfolie (83) als auch Bereiche der Substratschicht (82). In der Darstellung der Figur 1 erfolgt dies an einer Ablenkwalze (93). Auf der Transportfolie (81) verbleiben Laminatabschnitte (91). Auch andere Ausführungen von Ablenkvorrichtungen zum Abziehen des Stanzgitters (92) sind denkbar.

Die Transportfolie (81) mit den darauf haftenden Laminatabschnitten (91) wird mittels des Unstetigförderers weitergefördert. Beispielsweise werden die Laminatabschnitte (91) von der Transportfolie (81) auf eine Schutzfolie umgelagert und anschließend in Siegelrandbeutel verpackt.

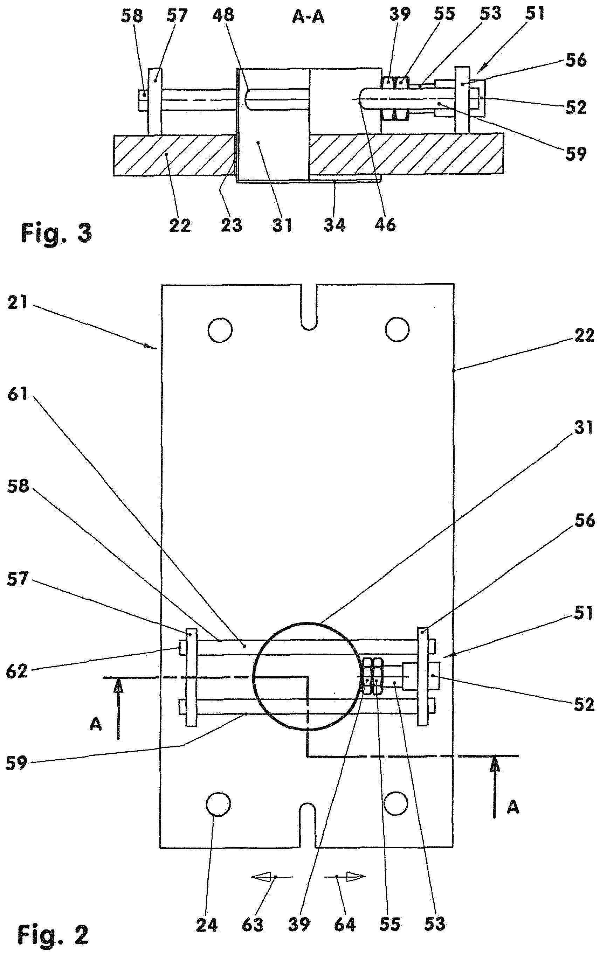

Die Figuren 2 und 3 zeigen einen Werkzeugträger (22) mit dem Trennwerkzeug (31) und einer Antriebseinheit (51). Der Werkzeugträger (22) ist im Ausführungsbeispiel eine rechteckige Trägerplatte (22) mit einem Durchbruch (23). Der Querschnitt des Durchbruchs (23) ist im Ausführungsbeispiel kreisförmig ausgebildet. Der Durchmesser des Durchbruchs (23) ist größer als die Summe aus dem Außendurchmesser des Trennwerkzeugs (31) und dem Hub der Antriebseinheit (51) für den Werkzeugversatz. An allen vier Ecken hat die Trägerplatte (22) z.B. eingesenkte Durchgangsbohrungen (24) zur Befestigung beispielsweise mittels Schrauben an einem Messerhubwerk. Die Längsrichtung der Trägerplatte (22) ist bei montierter Vorrichtung in der Förderrichtung (5) orientiert. Die Trägerplatte (22) liegt parallel zur Gegendruckplatte (11).

Auf der Trägerplatte (22) ist die Antriebseinheit (51) befestigt. Diese Antriebseinheit (51) umfasst zwei Konsolen (56, 57), in denen jeweils zwei parallel zueinander angeordnete Führungsstäbe (58, 59) befestigt sind. Diese Führungsstäbe (58, 59) haben in einem Tragbereich (61) zwischen den Konsolen (56, 57) einen zylindrischen Querschnitt. Sie durchdringen das Trennwerkzeug (31) und lagern dieses verschiebbar. Sie bilden damit eine Werkzeugführung. Die beiden Führungsstäbe (58, 59) sind z.B. aus einem austenitischen Stahl hergestellt und weisen im Tragbereich (61) beispielsweise eine Gleitbeschichtung auf. Im Ausführungsbeispiel haben sie im Tragbereich (61) einen Nenndurchmesser von 5 Millimetern mit einem Toleranzfeld g6 nach ISO 286. Der Ist-Durchmesser der Führungsstangen (58, 59) im Tragbereich (61) liegt damit zwischen 4,988 und 4,996 Millimetern. Die beiden in den Konsolen (56, 57) sitzenden Befestigungsenden (62) der Führungsstäbe (58, 59) können mit anderem Querschnitt ausgeführt sein.

Zwischen den Führungsstäben (58, 59) ist in der in den Figuren 2 und 3 rechts dargestellten Konsole (56) ein Aktuator (52) befestigt. Dieser Aktuator (52) hat beispielsweise einen linear verfahrbaren Stößel (53) mit einen Hub von 100 Mikrometern. Er kann sowohl Druck- als auch Zugkräfte übertragen. Seine neutrale Lage kann in einer Mittellage oder in einer Endlage seines Hubs sein. Der Aktuator (52) kann beispielsweise kapazitiv, z.B. mit Piezoelementen, mit Druckluft, etc. betrieben werden. Seine Hubfrequenz kann kleiner als 10 Hertz sein. Beispielsweise liegt die genutzte Hubfrequenz zwischen 0,5 Hertz und 5 Hertz. Der zum Trennwerkzeug (31) zeigende Kopf des Stößels (53) ist in diesem Ausführungsbeispiel am Trennwerkzeug (31) befestigt. Beispielsweise ist er in ein an der Außenseite (33) des Trennwerkzeugs (31) befestigte Mutter (39) eingeschraubt und mittels einer Sicherungsmutter (55) gesichert.

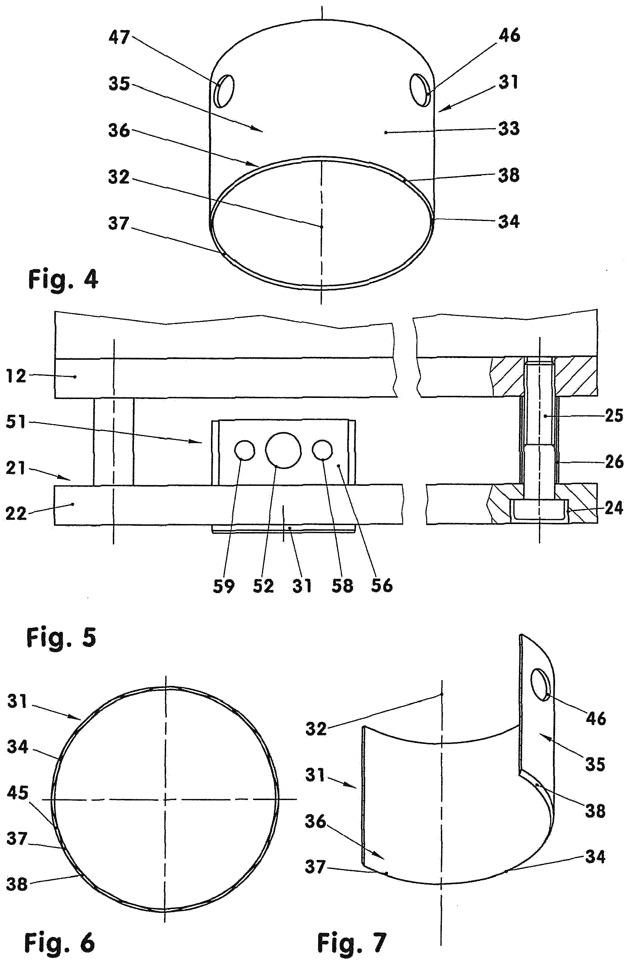

In der Figur 4 ist ein Trennwerkzeug (31) in der Bauform eines Ringmessers (31) dargestellt. Dieses Ringmesser (31) ist beispielsweise aus einem Werkzeugstahl hergestellt und hat eine zylindermantelförmige Gestalt. Es umfasst einen Stützkörper (35) und einen Werkzeugbereich (36). Sein Außendurchmesser beträgt beispielsweise 36 Millimeter, seine Höhe 77 % des Durchmessers. Die Dicke des Ringmessers (31) beträgt z.B. 0,5 Millimeter. In dem der Werkzeugschneide (34) abgewandten Stützkörper (35) weist das Ringmesser (31) vier Durchbrüche (46 - 48) auf, von denen jeweils zwei miteinander fluchten. In einer Ansicht vom Aktuator (52) aus haben die Durchbrüche (46 - 48) einen kreisförmigen Querschnitt. Der Durchmesser jedes dieser Durchbrüche (46 - 48) liegt in dieser Projektion beispielsweise in einem Toleranzfeld H7 nach ISO 286 um das Nennmaß. Im vorliegenden Ausführungsbeispiel beträgt das Nennmaß 5 Millimeter. Der Ist-Durchmesser der Bohrung beträgt damit zwischen 5 Millimeter und 5,012 Millimeter. Eines der beiden Bohrungspaare kann auch als Oval oder als Ellipse ausgebildet sein. Die lange Achse der jeweiligen Durchbrüche ist dann in der Umfangsrichtung des Ringmessers (31) orientiert. Die Länge der parallel zur Mittelachse (32) des Ringmessers (31) orientierten kurzen Achse der Durchbrüche (46 - 48) liegt dann innerhalb des oben genannten Toleranzfelds. Das auf den Führungsstäben (58, 59) montierte Trennwerkzeug (31) hat mit den Führungsstäben (58, 59) jeweils Spielpassungen.

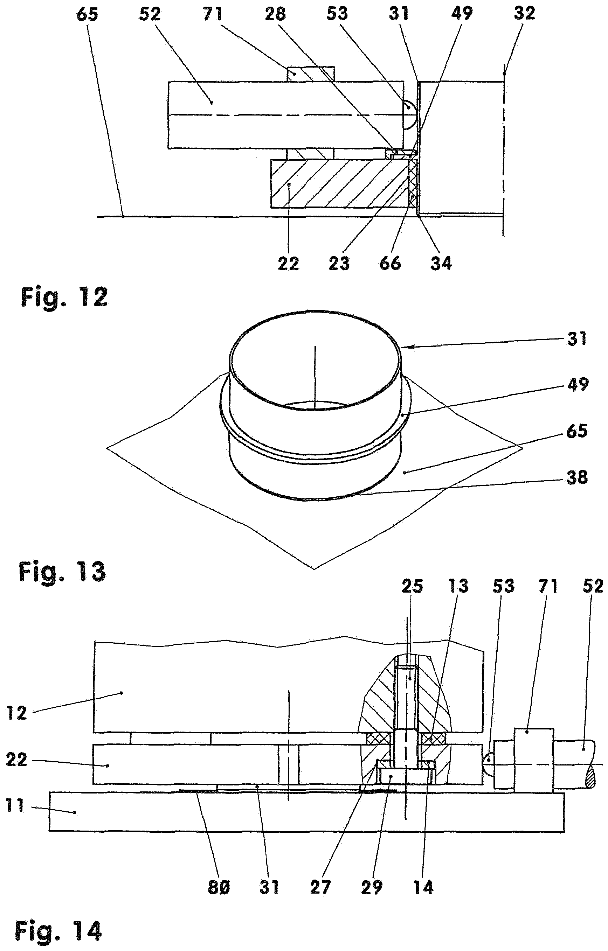

Die Werkzeugschneide (34) ist in diesem Ausführungsbeispiel als spitzwinklige Kante ausgebildet und wird durch die Schnittlinie einer Innendruckfläche (37) und einer Außendruckfläche (38) gebildet. Die Werkzeugschneide (34) spannt eine Schneidkantenebene (65) auf, vgl. die Figuren 12 und 13. Diese Schneidkantenebene (65) legt normal zur Mittelachse (32) des Trennwerkzeugs (31) und normal zu den Werkzeughubrichtungen (41, 42). Die Innendruckfläche (37) und die Außendruckfläche (38) sind die Werkzeugflanken (37, 38) des Trennwerkzeugs (31). An ihrer Innenseite ist die Werkzeugschneide (34) mittels der Innendruckfläche (37) begrenzt. In dem in der Figur 4 dargestellten Ringmesser (31) ist sie kegelstumpfförmig ausgebildet. Hierbei liegt die gedachte Kegelspitze auf der Mittelachse (32) in Richtung des Stützkörpers (35) versetzt zur Werkzeugschneide (34). Der Spitzenwinkel des Kegelstumpfs kann bis zu 90 Grad betragen. Die Mantellinien der Innendruckfläche (37) können auch parallel zueinander angeordnet sein. In diesem Fall ist die Innendruckfläche (37) eine Zylinderinnenfläche, vgl. Figur 7.

Die Außenseite der Werkzeugschneide (34) ist mittels der Außendruckfläche (38) begrenzt. Im Ausführungsbeispiel ist diese Außendruckfläche (38) kegelstumpfförmig ausgebildet. Die Kegelspitze des gedachten Kegels liegt auf der Mittellinie (32) auf der dem Stützkörper (35) abgewandten Seite des Trennwerkzeugs (31). Der Spitzenwinkel dieses Kegels beträgt im Ausführungsbeispiel 27 Grad. Dieser Winkel kann bis zu 90 Grad betragen.

Die Innendruckfläche (37) und die Außendruckfläche (38) schließen miteinander einen Schneidenwinkel ein. Im einem Radialschnitt des in der Figur 4 dargestellten Trennwerkzeugs (31) bilden die Innendruckfläche (37) und die Außendruckfläche (38) Schenkel eines gleichschenkligen Dreiecks, dessen dritte Seite eine Normale auf die Mittelachse (32) des Trennwerkzeugs (31) ist. Der Schneidenwinkel ist in diesem Ausführungsbeispiel symmetrisch zur Mitte der Werkzeugschneide (34) ausgebildet. Auch eine unsymmetrische Ausbildung des Schneidenwinkels ist denkbar. Die Werkzeugflanken (37, 38) können beschichtet ausgebildet sein.

Die Figur 5 zeigt eine Ansicht der an einer Hubplatte (12) montierten Trennwerkzeugeinheit (21) normal zu der in der Förderrichtung (5) orientierten Mittenlängsebene. Die Hubplatte (12) ist zusammen mit der Trennwerkzeugeinheit (21) in den Hubrichtungen (41, 42) normal zur Gegendruckplatte (11) verfahrbar. Der Werkzeugträger (22) ist mittels vier Schrauben (25), die die Durchgangsbohrungen (24) durchdringen, an der Hubplatte (12) befestigt. Zwischen der Hubplatte (12) und dem Werkzeugträger (22) sitzen Abstandshülsen (26) auf den Schrauben (25). Der Abstand zwischen der Hubplatte (12) und dem Werkzeugträger (22) ist damit konstant. Das Ringmesser (31) ragt nach unten beispielsweise um einen Betrag von 2 Millimetern aus dem Werkzeugträger (22) heraus.

Die Antriebseinheit (51) mit dem Aktuator (52) und den Führungsstäben (58, 59) sitzt auf dem Werkzeugträger (22). Die Führungsstäbe (58, 59) und der Aktuator (52) sind in der auf dem Werkzeugträger (22) befestigten Konsole (56) gehalten.

In der Figur 6 ist eine Unteransicht eines weiteren Trennwerkzeugs (31) dargestellt. Die Werkzeugschneide (34) dieses Ringmessers (31) hat einen Wellenschliff (45). Entlang ihrer Länge wandert die Werkzeugschneide (34) zwischen einer mit der Innenwandung fluchtenden Geraden und einer mit der Außenwandung fluchtenden Gerade hin und her. Beide Werkzeugflanken (37, 38) sind wellenförmig ausgebildet. Ihr Winkel mit der Mittelachse (32) des Trennwerkzeugs (31) beträgt zwischen Null Grad und 54 Grad. Der Stützkörper (35) dieses Trennwerkzeugs (31) ist so ausgebildet wie der Stützkörper (35) des in der Figur 4 dargestellten Trennwerkzeugs (31).

Die Figur 7 zeigt eine isometrische Schnittansicht eines weiteren Trennwerkzeugs (31). Dieses hat eine zylindrisch ausgebildete Innendruckfläche (37). Die Innendruckfläche (37) bildet zusammen mit der kegelförmig ausgebildeten Außendruckfläche (38) die Werkzeugschneide (34). Der Schneidenwinkel liegt auch in diesem Ausführungsbeispiel zwischen 20 Grad und 45 Grad. Der Stützkörper (35) des Trennwerkzeugs (31) ist so ausgebildet wie im Zusammenhang mit den vorherigen Beispielen beschrieben.

Die Werkzeugschneide (34) kann auch sägezahnförmig ausgebildet sein. Hierbei können alle Zähne in die gleiche Richtung orientiert sein. Auch ist es denkbar, einen Teil der Zähne, beispielsweise die Hälfte, in die entgegengesetzte Richtung zu orientieren. Bei einer sägezahnförmigen Werkzeugschneide (34) liegen die in Richtung der Gegendruckplatte (11) zeigenden Spitzen in der Schneidkantenebene (65).

In den Figuren 8 - 11 ist der Einsatz des Trennwerkzeugs (31) dargestellt. Das in diesen Figuren dargestellte Ringmesser (31) entspricht dem in der Figur 7 gezeigten Ringmesser (31). Bei der Betätigung wird das Trennwerkzeug (31) zunächst in der Werkzeughubrichtung (41) normal zur Laminatbahn (80) in Richtung der Gegendruckplatte (11) verfahren. Es stößt auf die Abdeckfolie (83), die hierbei gedehnt wird, vgl. Figur 8. Entlang der von der Werkzeugschneide (34) erzeugten Linie wird die Abdeckfolie (83) eingesenkt. Auch die elastisch und plastisch verformbare Substratschicht (82) wird zusammengedrückt.

Beim weiteren Absenken des Trennwerkzeugs (31) wird die Abdeckfolie (83) gedehnt. Beim Überschreiten der oben genannten Reißdehnung ergeben sich erste Risse in der Abdeckfolie (83). Beim weiteren Absenken des Trennwerkzeugs (31) reißt die Abdeckfolie (83) vollständig entlang der Werkzeugschneide (34) und das Trennwerkzeug (31) dringt in die Substratschicht (82) ein.

Beim Durchdringen der Substratschicht (82) verdrängt die Außendruckfläche (38) bereichsweise den das Trennwerkzeug (31) umgreifenden Umgebungsbereich (86) des Verbundmaterials (80) nach außen. Hierbei werden die Abdeckfolie (83) und die Substratschicht (82) in der unmittelbaren Umgebung des Trennwerkzeugs (31) in der Werkzeughubrichtung (41) verschoben und z.B. angrenzend aufgewölbt. Beispielsweise entsteht eine ringförmig ausgebildete Aufwölbung (88).

In dem vom Trennwerkzeug (31) umgebenen Innenbereich (87) bewirkt das Absenken des Trennwerkzeugs (31) in der Werkzeughubrichtung (41) ebenfalls ein Verdrängen der Abdeckfolie (83) und der Substratschicht (82). Aufgrund der unterschiedlichen Winkel der Werkzeugflanken (37, 38) zur Werkzeughubrichtung (41) ist in diesem Ausführungsbeispiel die Verdrängung des Verbundmaterials (80) im Innenbereich (87) geringer ausgeprägt als die Verdrängung im Umgebungsbereich (86).

Das verdrängte, bereichsweise gedehnte und bereichsweise gerissene Verbundmaterial (80) drückt von außen und von innen gegen das Trennwerkzeug (31). Beispielsweise verhindert die Trennmittelbeschichtung der beiden Werkzeugflanken (37, 38) ein Anhaften des Klebstoffs der Substratschicht (82) am Trennwerkzeug (31).

In der Darstellung der Figur 9 ist das Trennwerkzeug (31) in die Auftrennlage (44) abgesenkt. Beispielsweise liegt das Trennwerkzeug (31) mit der Werkzeugschneide (34) auf der Transportfolie (81) auf. Die Transportfolie (81) kann hierbei komprimiert werden. Sie wird mittels der Gegendruckplatte (11) abgestützt. Die Substratschicht (82) ist weitgehend durchtrennt, es können aber noch klebstoffhaltige Verbindungen zwischen dem Innenbereich (87) und dem Umgebungsbereich (86) bestehen. Das Ringmesser (31) ragt keilförmig in das Verbundmaterial (80). Beide Druckflächen (37, 38) werden belastet. Die Aufwölbung (88) im Umgebungsbereich (86) ist beim Einsatz des in der Figur 7 dargestellten Ringmessers (31) stärker ausgebildet als im Innenbereich (87).

Bei Lage der Trennwerkzeugs (31) in der Auftrennlage (44) wird im Ausführungsbeispiel der Aktuator (52) aktiviert, vgl. Figur 10. Das Trennwerkzeug (31) wird mittels des Aktuators (52) entlang der Führungsstäbe (58, 59) versetzt und wieder zurückverfahren. Dies erfolgt mit einer Rampenfunktion, wobei das Trennwerkzeug (31) dem Stößel (53) des Aktuators (52) aufgrund der Kopplung linear folgt. Hierbei wird in einem Takt das Trennwerkzeug (31) um den kompletten Hub des Stößels (53) des Aktuators (52) sowohl in die eine Versatzrichtung (63) als auch in die entgegengesetzte Versatzrichtung (64) versetzt. Bei Beendigung des Taktes steht das Trennwerkzeug (31) wieder in seiner Ausgangslage. In der Auftrennlage (44) kann das Trennwerkzeug (31) mehrmals in den Versatzrichtungen (63, 64) bewegt werden.

Bei der Betätigung des Aktuators (52) werden die verbliebenen Verbindungen der Substratschicht (82) zwischen dem Innenbereich (87) und dem Umgebungsbereich (86) durch Dehnung und/oder Scherung getrennt. Sowohl der Innenbereich (87) als auch der Umgebungsbereich (86) haften weiterhin auf der Transportfolie (81).

Beim Rückhub (42) des Trennwerkzeugs (31) von der Auftrennlage (44) in Richtung der Ruhelage (43) kann der Aktuator (52) weiterhin betätigt werden. Das Trennwerkzeug (31) wird entlang der Substratschicht (82) nach oben bewegt. Sobald das Trennwerkzeug (31) das Verbundmetarial (80) verlassen hat, bleibt der ringförmige Konturzug (85) übrig.

Die Figur 11 zeigt das Trennwerkzeug (31) nach dem Rückhub (42) in der Ruhelage (43). Die von den Werkzeugflanken (37, 38) entlastete Substratschicht (82) hat sich bereichsweise zurückverformt. Das Trennwerkzeug (31) hat das Verbundmaterial (80) verlassen. Der Innenbereich (37) und der Außenbereich (38) sind vollständig voneinander getrennt.

In der Figur 12 ist ein Teilschnitt einer Trennwerkzeugeinheit (21) dargestellt. Das Trennwerkzeug (31) ist auch in diesem Ausführungsbeispiel als Ringmesser (31) ausgebildet. Es kann auch als gerades Messer ausgeführt sein. Das Trennwerkzeug (31), vgl. Figur 13, hat an seiner Außenseite (33) einen z.B. umlaufenden Messersteg (49). Das Trennwerkzeug (31) sitzt auch in dieser Darstellung im Durchbruch (23) der Trägerplatte (22). In dem Durchbruch (23) sitzt außerdem ein das Trennwerkzeug (31) umgebender Elastomerring (66). Dies kann beispielweise ein Gummiring sein. Das Trennwerkzeug (31) ist damit federnd in der Trägerplatte (22) gelagert. Seine Schneidkantenebene (65) ist normal zu den Werkzeughubrichtungen (41, 42) ausgebildet. Der Messersteg (49) kann auf der Trägerplatte (22) und/oder auf dem Elastomerring (66) aufliegen. Eine ringförmig ausgebildete, an der Trägerplatte (22) befestigte Messersicherung (28) verhindert das Abheben des Trennwerkzeugs (31) relativ zur Trägerplatte (22). Der Messersteg (49) und die Messersicherung (28) können auch unterhalb der Trägerplatte (22) angeordnet sein. Der Messersteg (49) und die Messersicherung (28) können beispielsweise segmentartig ausgebildet sein. Das Trennwerkzeug (31) und/oder die Trägerplatte (22) können dann z.B. in der Betriebsposition eine Verdrehsicherung aufweisen. Das maximale Spiel des Trennmessers (31) relativ zur Trägerplatte (22) in den Werkzeughubrichtungen (41, 42) kann kleiner als 20 Mikrometer sein.

Auf der Trägerplatte (22) sitzt die Antriebseinheit (51) mit dem radial zum Trennwerkzeug angeordneten Aktuator (52). Auch der Einsatz mehrerer Aktuatoren (52), die relativ zum Trennwerkzeug (31) in verschiedene radiale Richtung orientiert sind, ist denkbar. In diesem Ausführungsbeispiel ist der kugelsegmentförmig ausgebildete Stößel (53) nicht fest mit dem Trennwerkzeug (31) verbunden. Beispielsweise ist der Stößel (52) in der Ruhelage des Aktuators (51) um 1/10 des Aktuatorhubs vom Trennwerkzeug (31) beabstandet. Dieser Abstand kann beispielsweise zwischen Null und 9/10 des Aktuatorhubs betragen.

Der übrige Aufbau der Vorrichtung (10) entspricht dem Aufbau der im Zusammenhang mit den Figuren 1 - 11 beschriebenen Vorrichtungen. Beim Betrieb der Vorrichtung (10) wird die Trägerplatte (22) mitsamt dem Trennwerkzeug (31) in Richtung der Gegendruckplatte (11) z.B. abgesenkt. Beispielsweise bei Lage des Trennwerkzeugs (31) in der Auftrennlage (44) und/oder beim Rückhub (42) wird der Aktuator (52) betätigt. Der Stößel (53) stößt an das Trennwerkzeug (31), sodass dieses in eine Erregungsrichtung (63) bewegt wird. Diese Erregungsrichtung (63) liegt parallel zur Schneidkantenebene (65). Die Trägerplatte (22) mit dem Trennwerkzeug (31) wird zunächst mit einer Sprungfunktion angesteuert, wobei der Stößel (53) gegen die Trägerplatte (22) stößt. Anschließend wird die Trägerplatte (22) mit dem Trennwerkzeug (31) relativ zur Gegendruckplatte (11) linear entlang einer Rampenfunktion verfahren. Hierbei wird der Elastomerring (66) verformt. Sobald der Stößel (53) des Aktuators (52) wieder in seine eingefahrene Ausgangslage zurückverfährt, verformt sich der ein Rückstellelement (66) bildende Elastomerring (66) in seine Ausgangsgestalt zurück. Bei einer erneuten Betätigung des Aktuators (52) wird dieser Bewegungsablauf wiederholt.

Soll das Trennwerkzeug (31) gewechselt werden, kann beispielsweise die Trennwerkzeugeinheit (21) als Ganzes abgenommen und eine neue Trennwerkzeugeinheit (21) montiert werden. Bei einer Ausbildung mit einem segmentartigen Messerring (49) und einer segmentartigen Messersicherung (28) kann zur Entnahme das Trennwerkzeug (31) relativ zur Trägerplatte (22) um die Mittelachse (32) geschwenkt werden. Die Montage erfolgt in umgekehrter Richtung.

Die Figur 14 zeigt eine weitere Anordnung der Werkzeugeinheit (21) mit der Antriebseinheit (51). Die Trägerplatte (22) ist mittels Schrauben (25) an der Hubplatte (12) befestigt. Zwischen der Hubplatte (12) und der Trägerplatte (22) sind elastisch verformbare Körper (13) angeordnet. Diese können z.B. als Elastomerkörper oder als Tellerfedern ausgebildet sein. Der Schraubenkopf (29) ist in der Einsenkung (27) der Durchgangsbohrung (24) auf einer Gleitscheibe (14) gelagert. Die Gleitscheibe (14), die Durchgangsbohrung (24) der Trägerplatte (22) und der elastisch verformbare Körper (13) haben radiales Spiel zur Schraube (25).

Das Trennwerkzeug (31) ist beispielsweise aus einem gerollten Bandstahl hergestellt. Es ist in die Trägerplatte (22) eingeklemmt. Ein Inneneinsatz kann das Trennwerkzeug zusätzlich an die Wandung des Durchbruchs (23) drücken.

Die Antriebseinheit (51) mit dem Aktuator (52) ist in diesem Ausführungsbeispiel auf der Gegendruckplatte (11) befestigt. Der Aktuator (52) ist so ausgebildet, wie im Zusammenhang mit dem vorigen Ausführungsbeispiel beschrieben. Eine horizontale Mittelebene des Aktuators (52) bildet beispielsweise auch eine horizontale Mittelebene der Trägerplatte (22).

In der Ruhelage des Aktuators (52) liegt der Stößel (53) an der Trägerplatte (22) an oder ist geringfügig beabstandet zu dieser. Der maximale Abstand entspricht dem im vorigen Ausführungsbeispiel genannten maximalen Abstand zwischen dem Stößel (52) und dem Trennwerkzeug (31).

Bei einer Betätigung des Aktuators (52) versetzt dieser die Trägerplatte (22) mit dem Trennwerkzeug (31) relativ zur Gegendruckplatte (11) in einer Ebene parallel zur Schneidebene (65). Die Erregungsrichtung (63) kann in dieser Ebene beispielsweise normal zur Förderrichtung (5) orientiert sein.

Bei der Erregung der Tragplatte (22) werden die elastisch verformbaren Körper (13) verformt. Diese Rückstellelemente (13) bauen eine Rückstellkraft auf. Die Trägerplatte (22) wird relativ zur Hubplatte (11) verschoben. Hierbei gleitet der Schraubenkopf (29) entlang der Gleitscheibe (14). Beim Zurückfahren des ausgefahrenen Stößels (53) entspannen sich die elastisch verformbaren Elemente (13). Die Trägerplatte (22) wird relativ zur Gegendruckplatte (11) entgegen der Erregungsrichtung (63) in ihre Ausgangslage zurückversetzt. Auch in diesem Ausführungsbeispiel kann die Betätigung des Aktuators (52) bei Lage des Trennwerkzeugs (31) in der Auftrennlage (44) oder beim Rückhub (42) des Trennwerkzeugs (31) erfolgen.

Es ist auch denkbar, dass der Aktuator (51) auf die Gegendruckplatte (11) wirkt. Beispielsweise ist die Gegendruckplatte (11) dann schwimmend gelagert. Der Aktuator (51) kann auf einem festen Maschinenteil oder an der Trägerplatte (22) befestigt sein. Bei der Betätigung des Aktuators (51) gibt der Stößel (53) einen Impuls auf die Gegendruckplatte (11). Diese wird mitsamt dem an der Gegendruckplatte (11) anliegenden Verbundmaterial (80) relativ zum Trennwerkzeug (31) versetzt. Der Konturzug (85) wird verbreitert, sodass die beim Hub des Trennwerkzeugs (31) in der Werkzeughubrichtung (41) verbliebenden Bindungen der klebstoffhaltigen Substratschicht (82) aufgetrennt werden.

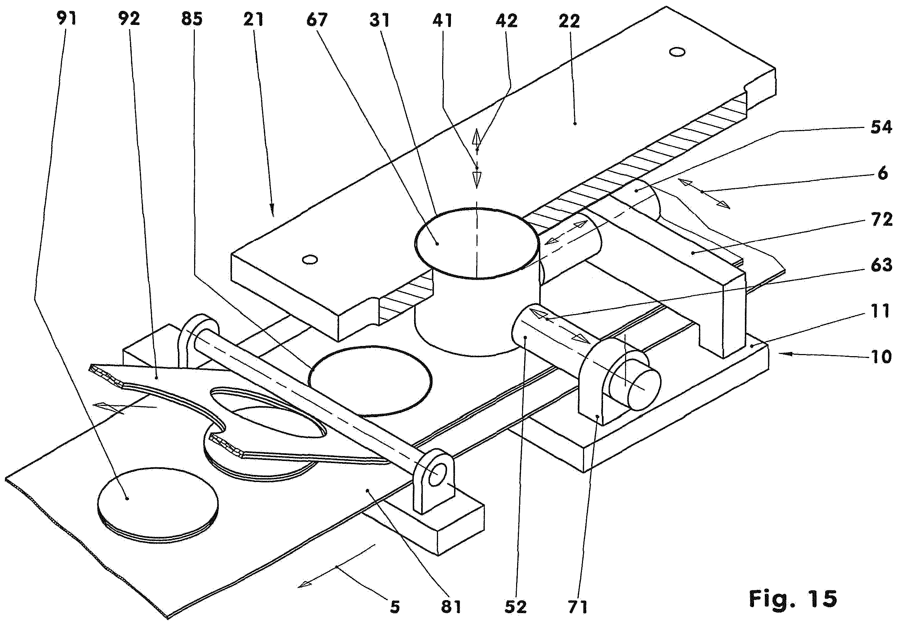

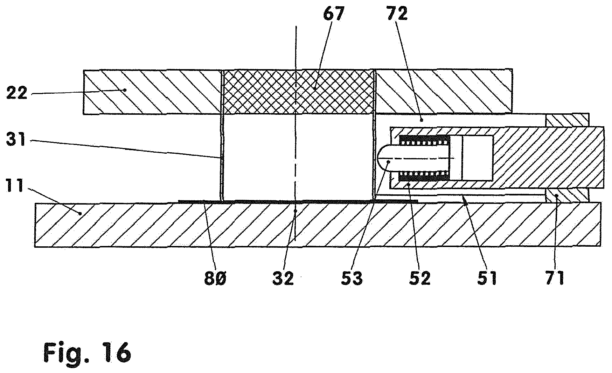

In den Figuren 15 und 16 ist eine Vorrichtung (10) mit zwei Antriebseinheiten (51) dargestellt. Hierbei zeigt die Figur 15 eine isometrische Darstellung der Vorrichtung (10). In der Figur 16 ist ein Querschnitt der Vorrichtung (10) dargestellt, wobei die Schnittebene durch die Mittelachse (32) und normal zur Förderrichtung (5) liegt.

Das Trennwerkzeug (31) ist auch in diesem Ausführungsbeispiel ein Ringmesser (31). Es sitzt fest eingeklemmt in der Trägerplatte (22). Zusätzlich sichert ein Inneneinsatz (67) die Lage des Trennwerkzeugs (31) relativ zur Trägerplatte (22). Der Überstand des Trennwerkzeugs (31) über die Trägerplatte (22) in Richtung der Gegendruckplatte (11) beträgt in diesem Ausführungsbeispiel 60 % des Durchmessers des Trennwerkzeugs (31). Sowohl die Darstellung der Figur 15 als auch die Darstellung der Figur 16 zeigen das Trennwerkzeug (31) in der Auftrennlage (44). Die Schneidkantenebene (65) des Trennwerkzeugs (31) ist um die Dicke der Transportfolie (81) beabstandet von der Gegendruckplatte (11).

Auf der Gegendruckplatte (11) sind zwei Adapter (71, 72) befestigt, die jeweils einen Aktuator (52, 54) tragen. Die beiden Aktuatoren (52, 54) sind beispielsweise identisch zueinander aufgebaut. Sie haben beispielsweise jeweils einen pneumatisch betätigbaren Stößel (53) mit einer Federrückstellung. Auch eine andere Art der Betätigung des Stößels (53) ist denkbar.

In einer Draufsicht auf das Trennwerkzeug (31) sind die beiden Aktuatoren (52, 54) um 90 Grad versetzt zueinander angeordnet. Beispielsweise steht ein erster Aktuator (52) normal zu der in der Förderrichtung orientierten vertikalen Mittenlängsebene der Vorrichtung (10). Ein zweiter Aktuator (54) ist in der Förderrichtung (5) normal zur Mittenquerebene der Vorrichtung (10) ausgerichtet. In diesem Ausführungsbeispiel sind die Aktuatoren (52, 54) beispielsweise mindestens um ein Zehntel und maximal um 100 % ihres Hubs vom Trennwerkzeug (31) beabstandet.

Beim Absenken des Trennwerkzeugs (31) in der Werkzeughubrichtung (41) wird das glockenartig ausgebildete Trennwerkzeug (31) kontaktlos vor den Stößeln (52) der Aktuatoren (52, 54) bewegt.

Beispielsweise sobald das Trennwerkzeug (31) die Auftrennlage (44) erreicht hat, wird der erste Aktuator (52) betätigt. Der Stößel (53) schlägt gegen das Trennwerkzeug (31). Das Trennwerkzeug (31) wird aufgrund dieser Sprungfunktion zu Schwingungen quer zur Förderrichtung (5) erregt. Beispielsweise zeitgleich mit dem Anschlagen des Stößels (53) des ersten Aktuators (52) wird der zweite Aktuator (54) betätigt. Sein Stößel (53) fährt aus und stößt in der Förderrichtung (5) gegen das Trennwerkzeug (31). Die Erregungsrichtung dieser Schwingung ist in der Förderrichtung (5) orientiert. Während des Rückhubs (42) kann die abwechselnde Betätigung des ersten (52) und des zweiten Aktuators (54) fortgesetzt werden. Die klebstoffhaltige Substanzschicht (82) wird aufgetrennt.

Die Betätigung der beiden Aktuatoren (52, 54) kann gleichzeitig oder zeitlich versetzt zueinander erfolgen. Auch kann einer der Aktuatoren (52; 54) oder können beide Aktuatoren (52, 54) innerhalb des Ringmessers (31) angeordnet sein.

Auch Kombinationen der genannten Ausführungsbeispiele sind denkbar.

### Bezugszeichenliste:

- 5: Förderrichtung
- 6: Breitenrichtung

- 10: Vorrichtung
- 11: Gegendruckplatte
- 12: Hubplatte
- 13: elastisch verformbare Körper, Rückstellelemente
- 14: Gleitscheibe

- 21: Trennwerkzeugeinheit
- 22: Trägerplatte, Werkzeughalter, Werkzeugträger
- 23: Durchbruch
- 24: Durchgangsbohrungen
- 25: Schrauben
- 26: Abstandshülsen
- 27: Einsenkung
- 28: Messersicherung
- 29: Schraubenkopf

- 31: Trennwerkzeug, Ringmesser
- 32: Mittelachse von (31)
- 33: Außenseite von (31)
- 34: Werkzeugschneide
- 35: Stützkörper
- 36: Werkzeugbereich
- 37: Innendruckfläche, Werkzeugflanke innen
- 38: Außendruckfläche, Werkzeugflanke außen
- 39: Mutter

- 41: Werkzeughubrichtung in Richtung (44)
- 42: Werkzeughubrichtung in Richtung (43), Rückhub
- 43: Ruhelage von (31)
- 44: Auftrennlage
- 45: Wellenschliff
- 46: Durchbruch in (31)
- 47: Durchbruch in (31)
- 48: Durchbruch in (31)
- 49: Messersteg

- 51: Antriebseinheit
- 52: Aktuator, erster Aktuator
- 53: Stößel
- 54: Aktuator, zweiter Aktuator
- 55: Sicherungsmutter
- 56: Konsole
- 57: Konsole
- 58: Führungsstab
- 59: Führungsstab

- 61: Tragbereich
- 62: Befestigungsenden
- 63: Versatzrichtung, Erregungsrichtung
- 64: Versatzrichtung, Erregungsrichtung
- 65: Schneidkantenebene
- 66: Elastomerelement, Rückstellelement
- 67: Inneneinsatz

- 71: Adapter
- 72: Adapter

- 80: Laminatbahn, Verbundmaterial
- 81: Transportfolie, Trägerfolie
- 82: Substratschicht
- 83: Abdeckfolie
- 84: Oberfläche von (80)
- 85: Konturzüge
- 86: Umgebungsbereich
- 87: Innenbereich
- 88: Aufwölbung

- 91: Laminatabschnitte
- 92: Stanzgitter
- 93: Ablenkwalze

## Patentansprüche

1. Vorrichtung (10) mit einem Trennwerkzeug (31) und mit einer Gegendruckplatte (11) zum Erzeugen von Konturzügen (85) in klebstoffhaltigen Verbundmaterialien (80), wobei das Trennwerkzeug (31) in translatorischen Werkzeughubrichtungen (41, 42) zwischen einer Ruhelage (43) und einer Auftrennlage (44) normal zur Gegendruckplatte (11) bewegbar ist, wobei in der Auftrennlage (44) das Trennwerkzeug (31) in Richtung der Ruhelage (43) von der Gegendruckplatte (11) beabstandet ist und wobei das Trennwerkzeug (31) eine Werkzeugschneide (34) mit einer normal zu den Werkzeughubrichtungen (41, 42) aufgespannten Schneidkantenebene (65) aufweist, **dadurch gekennzeichnet,**
- **dass** die Vorrichtung (10) mindestens einen Aktuator (52; 54) umfasst
- **dass** das Trennwerkzeug (31) und die Gegendruckplatte (11) relativ zueinander mittels jedes Aktuators (52; 54) in mindestens eine Erregungsrichtung (63; 64) mit einer Rampenfunktion und/oder mit einer Sprungfunktion ansteuerbar sind und
- **dass** jede dieser Erregungsrichtungen (63; 64) in einer Parallelebene zur Schneidkantenebene (65) des Trennwerkzeugs (31) liegt.

2. Vorrichtung (10) nach Anspruch 1, **dadurch gekennzeichnet, dass** das Trennwerkzeug (31) eine geschlossene Kontur aufweist und seine Mittelachse (32) parallel zu den Werkzeughubrichtungen (41, 42) liegt.

3. Vorrichtung (10) nach Anspruch 1, **dadurch gekennzeichnet, dass** die Erregungsrichtungen (63; 64) linear orientiert sind.

4. Vorrichtung (10) nach Anspruch 1, **dadurch gekennzeichnet, dass** der Hub jedes Aktuators (52; 54) kleiner oder gleich einem Millimeter ist.

5. Vorrichtung (10) nach Anspruch 1, **dadurch gekennzeichnet, dass** sie zwei Aktuatoren (52, 54) aufweist, die in einer Ebene parallel zur Schneidkantenebene (65) normal zueinander orientiert sind.

6. Verfahren zum Erzeugen von Konturzügen (85) in klebstoffhaltigen Verbundmaterialien (80) mittels einer Vorrichtung (10) nach Anspruch 1,
- wobei das Trennwerkzeug (31) in translatorischen Werkzeughubrichtungen (41, 42) zwischen einer Ruhelage (43) und einer zur Gegendruckplatte (11) beabstandeten Auftrennlage (44) normal zur Gegendruckplatte (11) und zurück bewegt wird,
- wobei das Trennwerkzeug (31) das eine klebstoffhaltige Substratschicht (82) enthaltende Verbundmaterial (80) zumindest bereichsweise durchtrennt,
- wobei in der Auftrennlage (44) und/oder während des Rückhubs (42) der mindestens eine Aktuator (52; 54) das Trennwerkzeug (31) und die Gegendruckplatte (11) relativ zueinander mittels einer Rampenfunktion oder einer Sprungfunktion parallel zur Schneidkantenebene (65) ansteuert.

7. Verfahren nach Anspruch 6, **dadurch gekennzeichnet, dass** in der Auftrennlage (44) der Abstand des Trennwerkzeugs (31) von der Gegendruckplatte (11) mindestens der Dicke einer Transportfolie (81) des klebstoffhaltigen Verbundmaterials (80) entspricht und maximal 100 Mikrometer größer als die Dicke dieser Trägerfolie (81) ist.

## Claims

1. A device (10) comprising a separating tool (31) and comprising a counterpressure plate (11) for producing contour geometries (85) in adhesive-containing composite materials (80), wherein the separating tool (31) is adapted to be moved in translational tool stroke directions (41, 42) between an inoperative position (43) and a parting position (44) normal to the counterpressure plate (11), wherein, in the parting position (44), the separating tool (31) is spaced apart from the counterpressure plate (11) towards the inoperative position (43), and wherein the separating tool (31) comprises a tool cutting edge (34) having a cutting edge plane (65) spanned normal to the tool stroke directions (41, 42), **characterized in that**
- the apparatus (10) comprises at least one actuator (52; 54),
- the separating tool (31) and the counterpressure plate (11) are adapted to be controlled relative to each other by means of each actuator (52; 54) in at least one excitation direction (63; 64) by means of a ramp function and/or a jump function, and
- each of these excitation directions (63; 64) lies in a parallel plane to the cutting edge plane (65) of the separating tool (31).

2. The apparatus (10) according to claim 1, **characterized in that** the separating tool (31) has a closed contour and its center axis (32) is parallel to the tool stroke directions (41, 42).

3. The device (10) according to claim 1, **characterized in that** the excitation directions (63; 64) are linearly oriented.

4. The apparatus (10) according to claim 1, **characterized in that** the stroke of each actuator (52; 54) is smaller than or equal to one millimeter.

5. The apparatus (10) according to claim 1, **characterized in that** it comprises two actuators (52, 54) which are oriented in a plane parallel to the cutting edge plane (65) and normal to each other.

6. A method for producing contour geometries (85) in adhesive-containing composite materials (80) by means of an apparatus (10) according to claim 1,
- wherein the separating tool (31) is moved in translational tool stroke directions (41, 42) between an inoperative position (43) and a parting position (44) spaced apart from the counterpressure plate (11) and normal to the counterpressure plate (11), and moved back,
- wherein the separating tool (31) at least area-wise parts the composite material (80) comprising an adhesive-containing substrate layer (82),
- wherein, in the parting position (44) and/or during the return stroke (42), the at least one actuator (52; 54) controls the separating tool (31) and the counterpressure plate (11) relative to each other in parallel to the cutting edge plane (65) by means of a ramp function or a jump function.

7. The method according to claim 6, **characterized in that**, in the parting position (44), the distance of the separating tool (31) to the counterpressure plate (11) corresponds at least to the thickness of a transport film (81) of the adhesive-containing composite material (80) and is at maximum 100 micrometers larger than the thickness of this carrier film (81).

## Revendications

1. Dispositif (10) doté d'un outil séparateur (31) et d'une plaque de contre-pression (11), destiné à produire des tracés de contour (85) dans des matériaux d'assemblage (80) contenant un adhésif, dans lequel l'outil séparateur (31) est mobile dans les directions translatives de course de l'outil (41, 42) entre une position de repos (43) et une position de séparation (44) normale à la plaque de contre-pression (11), dans lequel l'outil séparateur (31) est, dans la position de séparation (44), à distance de la plaque de contre-pression (11) en direction de la position de repos (43) et dans lequel l'outil séparateur (31) comporte un outil de coupe (34) doté d'un plan de bord de coupe (65) s'étendant de manière normale par rapport aux directions de course de l'outil (41, 42), **caractérisé**
- **en ce que** le dispositif (10) comprend au moins un actionneur (52 ; 54)
- **en ce que** l'outil séparateur (31) et la plaque de contre-pression (11) sont pilotables l'un par rapport à l'autre au moyen de chaque actionneur (52 ; 54) dans au moins une direction d'excitation (63 ; 64) avec une fonction rampe et/ou avec une fonction échelon et
- **en ce que** chacune de ces directions d'excitation (63 ; 64) est située dans un plan parallèle au plan du bord de coupe (65) de l'outil séparateur (31).

2. Dispositif (10) selon la revendication 1, **caractérisé en ce que** l'outil séparateur (31) comporte un contour fermé et son axe médian (32) est parallèle aux directions de course de l'outil (41, 42).

3. Dispositif (10) selon la revendication 1, **caractérisé en ce que** les directions d'excitation (63 ; 64) sont orientées de manière linéaire.

4. Dispositif (10) selon la revendication 1, **caractérisé en ce que** la course de chaque actionneur (52 ; 54) est inférieure ou égale à un millimètre.

5. Dispositif (10) selon la revendication 1, **caractérisé en ce qu'**il comporte deux actionneurs (52, 54), lesquels sont orientés de manière normale l'un par rapport à l'autre dans un plan parallèle au plan du bord de coupe (65).

6. Procédé destiné à produire des tracés de contour (85) dans des matériaux d'assemblage (80) contenant un adhésif au moyen d'un dispositif (10) selon la revendication 1,
- dans lequel l'outil séparateur (31) est déplacé en va-et-vient dans des directions translatives de course de l'outil (41, 42) entre une position de repos (43) et une position de séparation (44) normale à la plaque de contre-pression (11) et à distance de la plaque de contre-pression (11),
- dans lequel l'outil séparateur (31) sectionne au moins par endroits le matériau d'assemblage (80) contenant une couche de substrat (82) contenant un adhésif,
- dans lequel dans la position de séparation (44) et/ou pendant la course retour (42), l'au moins un actionneur (52 ; 54) pilote l'outil séparateur (31) et la plaque de contre-pression (11) l'un par rapport à l'autre parallèlement au plan du bord de coupe (65) au moyen d'une fonction rampe ou d'une fonction échelon.

7. Procédé selon la revendication 6, **caractérisé en ce que** dans la position de séparation (44) la distance de l'outil séparateur (31) à la plaque de contre-pression (11) correspond au moins à l'épaisseur d'un film de transport (81) du matériau d'assemblage (80) contenant un adhésif et n'excède pas 100 micromètres de plus que l'épaisseur de ce film de support (81).
